# EUROPÄISCHE PATENTSCHRIFT

(11) **EP 2 691 201 B1**
(45) Veröffentlichungstag und Bekanntmachung des Hinweises auf die Patenterteilung: **12.08.2015**
(21) Anmeldenummer: 12712953.4
(22) Anmeldetag: 28.03.2012
(51) Int. Cl.: B23B 13/00, B23B 13/02, B23B 13/12

(54) **BUCHSENAUSRICHTVORRICHTUNGEN FÜR STANGENLADEMAGAZINE UND VERFAHREN ZUR AUSRICHTUNG VON BUCHSEN MITTELS SOLCHEN BUCHSENAUSRICHTVORRICHTUNGEN**
SOCKET ALIGNMENT DEVICES FOR A BAR LOADING MAGAZINE AND METHOD FOR ALIGNING SOCKETS WITH THOSE SOCKET ALIGNMENT DEVICES
DISPOSITIFS D'ALIGNEMENT DE GUIDES POUR MAGASIN DE CHARGEMENT DE BARRES ET PROCÉDÉ D'ALIGNEMENT DE GUIDES UTILISANT CES DISPOSITIFS D'ALIGNEMENT DE GUIDES

(30) Priorität: 30.03.2011 DE 102011015578
(43) Veröffentlichungstag der Anmeldung: 05.02.2014
(73) Patentinhaber: FMB Maschinenbaugesellschaft mbH & CO. KG, 97906 Faulbach (DE)
(72) Erfinder: SCHMIDT, Falk, 97900 Külsheim (DE)
(74) Vertreter: Bill, Burkart Hartmut
(86) Internationale Anmeldenummer: PCT/EP2012/001358
(87) Internationale Veröffentlichungsnummer: WO 2012/130444

(56) Entgegenhaltungen:
- EP-A2- 0 475 152
- CH-A- 490 141
- DE-A1- 2 025 460
- US-B1- 6 302 003

## Beschreibung

Die vorliegenden Erfindung betrifft Buchsenausrichtvorrichtungen eines Stangenlademagazins zum Führen von Materialstangen an einem Drehautomaten nach den Oberbegriffen der Ansprüche 1 und 6 sowie Verfahren zur Ausrichtung von Buchsen mittels entsprechender Buchsenausrichtvorrichtungen.

Drehautomaten zur spangebenden Bearbeitung von stangenförmigem Halbzeug, das im Folgenden als Materialstangen bezeichnet wird, sind grundsätzlich bekannt und umfassen üblicherweise einen feststehenden oder verfahrbaren Spindelstock, in dem eine oder mehrere durch eine Antriebseinheit angetriebene Spindel/- n entlang einer z-Achse gelagert sind. In dem Prozessraum des Drehautomaten wird die in der Spindel des Drehautomaten eingespannte Materialstange mit einem Werkzeug bearbeitet. Dazu wird die Materialstange üblicherweise von der Spindelstockrückseite des Drehautomaten in dessen als Hohlwelle ausgebildete drehbare Spindel eingeführt und in dieser zur Bearbeitung mit einem Spannmittel festgespannt.

Stangenlademagazine, welche auch als Lademagazine oder als Stangenlader bezeichnet werden, sind desgleichen grundsätzlich bekannt und ermöglichen die Führung von Materialstangen an diesen Drehautomaten. Das an einem Drehautomaten jeweilige bereitgestellte Stangenlademagazin muss die Materialstange während des gesamten Bearbeitungsvorganges möglichst präzise führen, um Vibrationen sowie Schwingungen an dem Drehautomaten und dem Stangenlademagazin zu vermeiden.

Bei der Vermeidung von Schwingungen bzw. Vibrationen kommt vor allem der Lagerung der Materialstange in dem Stangenlademagazin eine besondere Bedeutung zu, wobei verschiedene Anforderungen hinsichtlich der Dimensionen und der Geometrien der Materialstangen zu berücksichtigen sind. So weisen die Materialstangen Längen von bis zu 6 m und Durchmesser zwischen 1 bis 100 mm auf. Des Weiteren können die Materialstangen verschiedenste Querschnittsprofile aufweisen, wobei zwischen symmetrischen und unsymmetrischen Querschnittsprofilen zu unterscheiden ist.

Andererseits muss die Führung der Materialstangen in dem Stangenlademagazin verschiedenste Anforderungen gewährleisten um einen wirtschaftlichen und produktiven Fertigungsprozess zu ermöglichen. Diesbezüglich sind vor allem hohe Bearbeitungsdrehzahlen der drehend zu bearbeitenden Materialstangen von bis 15000 Umdrehungen pro Minute, als auch deren Ausrichtung in der Drehspindel des Drehautomation einzubeziehen. So kommt für drehend zu bearbeitende Materialstangen eine zentrische oder auch eine exzentrische Einspannung in der Drehspindel des Drehautomaten in Betracht, weshalb Unwuchten aufgrund einer ungleichen Massenverteilung um die Dreh- bzw. Längsachse der Materialstangen auftreten können und weshalb hohe Anforderung von der Führung der Stangenlademagazine erfüllt werden müssen, um die erforderlichen Fertigungstoleranzen einhalten zu können.

Um den genannten unterschiedlichen Anforderungen an die Lagerung und die Führung von Materialstangen in Stangenlademagazinen gerecht zu werden, wurden sogenannte Buchseneinheiten entwickelt, welche üblicherweise in dem Stangenlademagazin entlang der z-Achse verfahrbar sind und welche zur Lagerung und Führung der Materialstangen mit Buchsen ausgestattet sind, in die die Materialstangen in Längsrichtung eingeführt werden können.

Diese Buchsen sind innerhalb einer Buchseneinheit drehbar gelagert, wobei üblicherweise mehrere Buchseneinheiten in gleichmäßigen Abständen entlang der Längsache der Materialstange positioniert sind, um Schwingungen weitestgehend vermeiden zu können. Eine jeweilige zu führende zylindrische Materialstange wird dabei während der Bearbeitung in dem Drehautomaten in eine zylindrische Ausnehmung der Buchse gleitend derart gelagert, dass die Materialstange an dem beigestellten Drehautomaten sicher geführt wird.

Um die Fertigungspräzision noch weiter zu verbessern, wurden für diese Buchseneinheiten in den vergangenen Jahren Buchsen mit einer Profilausnehmung entwickelt, welche zu einem Querschnittsprofil von Materialstangen korrespondiert, so dass die Materialstangen formschlüssig in der Profilausnehmung dieser Buchsen anliegen und daher hinsichtlich radialer Unwuchten noch präziser in dem Stangenlademagazin geführt werden können.

Diese Buchsen mit einer Profilausnehmung sind entsprechend auswechselbar, so dass diese an den entsprechenden Anwendungsfall, das heißt an das entsprechende Querschnittsprofil der profilierten Materialstange oder an das zylindrische Profil einer exzentrisch zu lagernde Materialstange, angepasst werden können, indem Buchsen mit der entsprechenden Profilausnehmung und/oder mit einer exzentrisch zur Rotationsachse der Buchse angeordneten Profilausnehmung in die Buchseneinheit eingesetzt werden.

Damit das Einführen einer Materialstange in eine mit einer Profilausnehmung versehene Buchse möglich ist, muss diese vor dem Bearbeitungsprozess mit dem Drehautomaten in dem Stangenlademagazin in eine entsprechende Drehstellung gebracht werden, so dass die Profilausnehmung der Buchse fluchtend zum Querschnittsprofil der Materialstange fluchtend ausgerichtet ist und diese anschließend axial in die Buchse eingeführt werden kann.

Grundsätzlich ist es auch durch ein manuelles Drehen der Buchsen möglich, diese in die entsprechende fluchtende Drehstellung auszurichten. Allerdings erfordert ein derartiger handgeführter Beladungsbetrieb von Stangenlademagazinen einen sehr hohen Zeitaufwand, was mit einer Verringerung der Produktivität bei der Be- oder Verarbeitung von profilierten oder exzentrisch zu bearbeitenden Materialstangen einhergeht.

Aus der US 6 302 003 B1, die Buchsenausrichtvorrichtungen nach den Oberbegriffen der Ansprüche 1 und 6 offenbart, ist eine Buchsenausrichtvorrichtung eines Stangenlademagazins zum Führen von Materialstangen an einem Drehautomaten bekannt, bei welcher ein Synchronisationskopf zur Bearbeitung von profilierten Materialstangen vorgesehen ist. Hierzu wird ein Stangenverbindungsmittel, in welches eine profilierte Buchse eingesetzt ist und in welches die Materialstange eingeführt werden kann, von einem zahnradgetriebenen Antriebsmittel mittels eines Motors angetrieben.

### Aufgabe:

Vor diesem Hintergrund, hat sich die vorliegende Erfindung daher die Aufgabe gestellt, den Automatisierungsgrad in Stangenlademagazinen weiter zu erhöhen und insbesondere die Einführung von profilierten oder exzentrisch zu bearbeitenden Materialstangen in die Führung von Stangenlademagazinen effizienter zu gestalten.

Die Lösung dieser Aufgabe ist durch die Gegenstände gemäß den unabhängigen Vorrichtungsansprüchen 1 und 6 und Verfahrensansprüchen 7 und 8 gegeben.

Bevorzugte und/oder vorteilhafte Ausführungen und Weiterbildungen sind Gegenstand der jeweiligen Unteransprüche.

Erfindungsgemäß wird dies durch eine Buchsenausrichtvorrichtung eines Stangenlademagazins zum Führen von Materialstangen an einem Drehautomaten erreicht, wobei durch die Längsachse einer in der Stangenladevorrichtung geführten Materialstange eine z-Achse definiert ist, und wobei in dem Stangenlademagazin wenigstens eine Vielzahl von entlang der z-Achse bewegliche erste Buchsen angeordnet sind, in welche die Materialstange zu deren Bearbeitung in dem Drehautomaten entlang der z-Achse einzuführen ist, wobei sich durch die ersten Buchsen eine entweder koaxial oder parallel zur z-Achse angeordnete Rotationsachse erstreckt, um welche die ersten Buchsen drehbar gelagert sind. Ferner ist wenigstens ein Antriebsmittel umfasst, welches mit den ersten Buchsen koppelbar ist, und zwar zum rotatorischen Antrieb der ersten Buchsen um die Rotationsachse derart, dass die ersten Buchsen und das Querschnittsprofil der Materialstange zum Einführen der Materialstange zueinander fluchtend ausrichtbar sind.

Die Erfindung ermöglicht es somit, dass die Drehstellung von Buchsen zur Lagerung und zur Führung von Materialstangen in einem Stangenlademagazin durch einen mit den Buchsen gekoppelten Antrieb derart verändert werden kann, so dass die drehbar gelagerten Buchsen zum Querschnittsprofil der Materialstange entsprechend fluchtend ausrichtbar sind.

Infolgedessen ermöglicht die Erfindung im Vergleich zum Stand der Technik das automatisierte Einführen von Materialstangen entlang deren Längsachse in die Buchsen eines Stangenlademagazins und ferner eine effiziente Bearbeitung von profilierten und/oder exzentrisch zu bearbeitenden Materialstangen an Drehautomaten bei einer gleichzeitig hohen Führungspräzision der Materialstangen. Darüber hinaus ermöglicht die Erfindung den effizienten Einsatz von Buchsen mit einer profilierten und/oder exzentrisch angeordneten Profilausnehmung und infolgedessen hohe Verarbeitungsgeschwindigkeiten.

Es sei ferner erwähnt, dass im Folgenden unter dem Begriff einer Buchse, und im Folgenden auch unter dem Begriff einer ersten und zweiten Buchse, jegliches Lager- und/oder Führungsmittel zu verstehen ist, welches eine darin einzuführende Materialstange bezüglich ihrer radialen Ausrichtung zu lagern und entlang ihrer Längsrichtung zu Führen in der Lage ist, wobei eine derartige Buchse eine Drehbewegung der zu lagernden bzw. führenden Materialstange um deren Längsachse sowie eine Axialbewegung der Materialstange ermöglicht. Insbesondere ist eine derartige Buchse mit einer zylindrischen Bohrung und/oder einer Profilausnehmung versehen, welche es gestattet, eine Materialstange in Längsrichtung einzuführen und gleitend zu lagern. Als Material für eine derartige Buchse eignet sich insbesondere Kunststoff, wobei auch Metalle oder Keramiken zur Anwendung kommen können.

Des weiteren ist die Buchse in dem Stangenlademagazin drehbar um eine Rotationsachse angeordnet, wobei durch die Längsachse der Materialstange eine z-Achse definiert ist, welche im Falle von Buchsen mit einer bezüglich der Rotationsachse der Buchse zentrisch angeordneten Profilausnehmung mit der Rotationsachse zusammenfällt. Ist die Profilausnehmung der Buchse exzentrisch zu deren Rotationsachse angeordnet, so ist die Rotationsachse parallel zur z-Achse bzw. der Längsachse der der Materialstange ausgerichtet.

In einer bevorzugten Ausführungsform der Erfindung ist eine Buchse in einem Buchsengestell drehbar um eine in z-Achse ausgerichtete Rotationsachse angeordnet und insbesondere in einem Kugel-, einem Wälzlager oder in einem Gleitlager gelagert. Im Sinne der Erfindung wird deshalb unter einer Buchse auch eine Gruppierung von mehreren einzelnen Buchsen zum Einführen von Materialstangen verstanden, welche in einem Buchsengestell zusammengefasst angeordnet, und drehfest miteinander verbunden sind, beispielsweise mit einem Verbindungsrohr oder dergleichen. Ferner kann eine derartige Buchse und/oder ein derartiges Buchsengestell in dem Stangenlademagazin entlang der z-Achse beweglich oder unbeweglich bezüglich der durch die Buchse zu führende Materialstange angeordnet sein.

Erfindungsgemäß sind als Antriebsmittel Reibräder umfasst, welche in der Lage sind, Buchsen zum Lagern und Führen von Materialstangen in Stangenlademagazinen in eine Rotationsbewegung zu versetzen und welche mit diesen hierzu gekoppelt werden können.

Die Koppelung des Antriebsmittels mit einer ersten Buchse erfolgt in einer bevorzugten Ausführungsform der Erfindung an einer Umfangsfläche der ersten Buchse, wobei das Antriebsmittel auch an der Stirnfläche der ersten Buchse oder innerhalb der Buchse, beispielsweise als Direktantrieb, angeordnet sein kann. Unter einer Koppelung wird dabei eine reibschlüssige Verbindung des Antriebsmittels mit der ersten Buchse verstanden. Zur Koppelung des Antriebsmittels sind Reibräder vorgesehen.

Gemäß der Erfindung ist eine Halteeinrichtung umfasst, welche die ersten Buchsen zur zueinander fluchtenden Ausrichtung in einer vorbestimmten Drehstellung gegenüber dem Querschnittsprofil der Materialstange anhält. Eine derartige Halteeinrichtung gestattet es, die erste Buchse bezüglich ihrer Drehstellung anzuhalten und kann insbesondere formschlüssig, kraftschlüssig, reibschlüssig, magnetisch und/oder induktiv wirken.

In einer bevorzugten Ausführungsform der Erfindung ist diese Halteeinrichtung an dem Buchsengestell und/oder in dem Stangenlademagazin angeordnet und ermöglicht das Anhalten der ersten Buchse in einer vorbestimmten Drehstellung. Als Halteeinrichtungen kommen alle denkbaren Formen von mechanischen und/oder elektrischen Halteeinrichtungen in Frage, wie beispielsweise mechanische Bremsen, elektrische Regler oder Steuerungen von Antrieben bzw. elektrischen Bremsen, welche die durch das Antriebsmittel in Rotation versetzte erste Buchse anhalten und/oder fixieren können.

In einer bevorzugten Ausführungsform der Erfindung ist an der ersten Buchse ein Positionsgeber angeordnet, welcher die Drehstellung der ersten Buchse um deren Rotationsachse zu bestimmen in der Lage ist und der mit der Halteeinrichtung zusammenwirkt. Ein derartiger Positionsgeber kann mechanischer Art sein, wie beispielsweise ein Eingriffsmittel, welches an der ersten Buchse angeordnet ist und welches in eine in dem Stangenlademagazin angeordnete Aufnahme eingreift, oder eine an der ersten Buchse angeordnete Aufnahme, in welche ein in dem Stangenlademagazin angeordnetes Eingriffsmittel eingreifen kann, so dass die erste Buchse durch das Haltemittel in einer vorbestimmten Drehstellung angehalten werden kann.

In einer alternativen Ausführungsform der Erfindung ist ein optischer und/oder elektrischer Positionsgeber, insbesondere in Form einer elektronischen Codierung oder eines Impulsgebers, an einer vorbestimmten Drehstellung der ersten Buchse angeordnet. Alternativ kann auch ein Sensor, welcher in dem Stangenlademagazin angeordnet und mit dem Positionsgeber zusammenwirkt, die Drehstellung der ersten Buchse detektieren. Der Positionsgeber und/oder der Sensor sind mit einer Auswerteeinrichtung und/oder mit der Steuerung des Stangenlademagazins verbunden und wirken mit der Halteinrichtung zusammen, welche wiederum die erste Buchse in der durch den Positionsgeber und/oder dem Sensor detektierten vorbestimmten Drehstellung anhalten kann. Erfindungsgemäß sind Reibräder als Antriebsmittel umfasst, welche in der Lage sind, Buchsen in Stangenlademagazinen in eine Rotationsbewegung zu versetzen. In besonders zweckmäßiger Ausgestaltung der Erfindung wird eine Vielzahl von ersten Buchsen in dem Stangenlademagazin von einem rotatorisch wirkenden Motor, von einem Linearmotor oder von einem Stellmotor angetrieben, wobei die Kraftübertragung auf die Buchse ummittelbar oder über eine Hilfsmittel wie eine Antriebswelle, ein Riemenantrieb, ein Zahnrad, ein eine Zahnstange oder dergleichen erfolgen kann.

In besonders vorteilhafter Ausgestaltung der Erfindung ist das Antriebsmittel mit der ersten Buchse wahlweise koppel- oder entkoppelbar, so dass das Antriebsmittel in einem ersten Schritt an die erste Buchse angekoppelt werden kann und die erste Buchse durch das Antriebsmittel in eine Drehbewegung versetzt werden kann. Nachdem die erste Buchse zum Querschnittsprofil der Materialstange fluchtend ausgerichtet und diese anschließend eingeführt worden ist, kann somit in einem zweiten, nachfolgenden Schritt das Antriebsmittel wieder von der ersten Buchse entkoppelt werden, so dass die Buchse nunmehr frei rotierbar ist und die Materialstange in dem Drehautomaten bearbeitet werden kann.

In zweckmäßiger Ausgestaltung der Erfindung ist das Antriebsmittel an einer Schwenkvorrichtung angebracht, welche zur Kopplung des Antriebsmittels mit der ersten Buchse an diese heran geschwenkt werden kann. Eine derartige Schwenkvorrichtung kann in dem Stangenlademagazin oder außerhalb von diesem angeordnet sein und kann mechanisch, elektrisch, vollautomatisch und/oder manuell betätigt und/oder gesteuert sein. Ferner kann eine Steuerung einer derartigen Schwenkvorrichtung in die Steuerung des Stangenlademagazins und/oder des Drehautomaten elektrisch eingebunden sein.

In einer alternativen Ausführung der Erfindung ist zur Kraftübertragung zwischen die erste Buchse und dem Antriebsmittel eine Kupplung geschaltet, welche insbesondere selbsttätig schaltend ist. Eine derartige selbsttätig schaltende Kupplung kann die Kopplung des Antriebsmittels mit der ersten Buchse in Abhängigkeit eines bestimmten Schwellwerts an- oder abkuppeln. Beispielsweise kann eine derartige Kupplung drehmomentabhängig auslösend geschaltet sein und die Ankoppelung des Antriebsmittels an die erste Buchse selbsttätig auskuppeln, wenn ein vorbestimmtes an der ersten Buchse anliegendes Drehmoment überschritten ist und nachdem das Haltemittel die erste Buchse in einer vorbestimmten Drehstellung angehalten hat. Selbstverständlich können im Rahmen der Erfindung auch andere Kupplungsarten, wie beispielsweise Drehzahl gesteuerter oder elektronisch gesteuerter Art oder dergleichen, zur Anwendung kommen.

In einer besonders vorteilhaften Ausgestaltung der Erfindung ist das Antriebsmittel und die ersten Buchsen entlang der z-Achse in dem Stangenlademagazin beweglich angeordnet, so dass die ersten Buchsen und der Antrieb entlang der z-Achse verfahrbar sind und daher an einem vorbestimmten Ort entlang der Längsachse der Materialstange positioniert werden kann. Auf diese Weise ist es möglich, die Materialstange an einer entsprechend geeigneten Längsposition sichern zu lagern und zu führen und darüber hinaus, zur Einführung einer neuen Materialstange in das Stangenlademagazin, die ersten Buchsen und den Antrieb in die entsprechenden Ausgangsposition in dem Stangenlademagazin zu fahren. In einer zweckmäßigen Ausgestaltung der Erfindung ist auch das Antriebsmittel an einem Buchsengestell angeordnet und mit diesem entlang der z-Achse beweglich. In einer weiteren Ausgestaltung der Erfindung ist lediglich das Buchsengestell beweglich entlang der z-Achse angeordnet, während das Antriebsmittel in Bezug auf die z-Achse feststehend ist.

Die Erfindung umfasst auch eine Buchsenausrichtvorrichtung eines Stangenlademagazins zum Führen von Materialstangen an einem Drehautomaten, insbesondere gemäß einem der vorgenannten Merkmale, wobei durch die Längsachse einer in der Stangenladevorrichtung geführten Materialstange eine z-Achse definiert ist, und wobei in dem Stangenlademagazin eine erste Buchse angeordnet ist, in welche die Materialstange zu deren Bearbeitung in dem Drehautomaten entlang der z-Achse einzuführen ist, wobei sich durch die erste Buchse eine entweder koaxial oder parallel zur z-Achse angeordnete Rotationsachse erstreckt, um welche die erste Buchse drehbar gelagert ist und wobei wenigstens ein Antriebsmittel umfasst ist, welches wenigstens mit der ersten Buchse koppelbar ist, und zwar zum rotatorischen Antrieb der ersten Buchse um die Rotationsachse derart, dass die erste Buchse und das Querschnittsprofil der Materialstange zum Einführen der Materialstange zueinander fluchtend ausrichtbar sind, wobei in der Stangenladevorrichtung eine zweite Buchse beweglich entlang der z-Achse angeordnet ist, und wobei sich durch die zweite Buchse eine entweder koaxial oder parallel zur z-Achse angeordnete Rotationsachse erstreckt, um welche die zweite Buchse drehbar gelagert angeordnet ist, und wobei in die zweite Buchse die Materialstange entlang der z-Achse einzuführen ist, wobei die erste und die zweite Buchse komplementär zueinander ausgebildete Mitnahmemittel aufweisen, insbesondere in Art von Reibflächen und/oder magnetisch wirkenden Flächen und/oder eines Eingriffsmittel und einer Aufnahme, so dass die erste und die zweite Buchse reib- und/oder formschlüssig miteinander koppelbar sind, derart, dass bei Drehung der ersten Buchse diese die zweite Buchse mitnimmt.

In vorteilhafter Ausführungsform der Erfindung sind die Mitnahmemittel an einer vorbestimmten Position an der ersten und der zweiten Buchse angeordnet, so dass die Mitnahme der zweiten Buchse ausschließlich in einer bestimmten Drehstellung bezüglich der ersten bzw. der zweiten Buchse erfolgt und die erste und die zweite Buchse in einer vorbestimmten Drehstellung zueinander ausrichtbar sind um eine fluchtende Ausrichtung der Profilausnehmungen der ersten und der zweiten Buchse und infolgedessen die Einführung einer Materialstange in die erste und in die zweite Buchse zu ermöglichen.

In einer besonderen Ausführungsform der Erfindung sind eine Vielzahl von ersten und/oder zweiten Buchsen in dem Stangenlademagazin vorgesehen, in welchen die Materialstange geführt und gelagert werden kann und welche Merkmale der bereits oben beschriebenen ersten und/oder zweiten Buchse aufweisen können. Ferner sind auch eine Vielzahl von Antriebsmittel und/oder Kraftübertragungsmittel im Rahmen der Erfindung umfasst, welche jeweils mit einer oder mit mehreren ersten Buchsen gekoppelt werden können und welche ebenfalls entlang der z-Achse beweglich oder feststehend anordenbar sind.

Das erfindungsgemäße Verfahren zur Ausrichtung von Buchsen erfolgt mittels der vorhergehend beschriebenen erfindungsgemäßen Buchsenausrichtvorrichtungen und umfasst in einem ersten Schritt das rotatorische Antreiben der ersten Buchse(n) durch das Antriebsmittel, und in einem zweiten Schritt das Einführen der Materialstange in die erste(n) Buchse(n) entlang der z-Achse.

Vor dem Einführen der Materialstange in die ersten Buchsen entlang der z-Achse werden die ersten Buchsen in einer vorbestimmten Drehstellung zur zueinander fluchtenden Ausrichtung gegenüber dem Querschnittsprofil der Materialstange angehalten und die Materialstange erst dann in die ersten Buchsen eingeführt.

Ist die erste Buchse ausgerichtet, so erfolgt aufgrund eines Axialdrucks auf die Materialstange das Einführen in die ersten Buchsen entlang der z-Achse.

In einem weiteren bevorzugten Verfahren der Erfindung wird die erste Buchse nach dem ersten Schritt des rotatorischen Antreibens der ersten Buchse durch das Antriebsmittel durch reib- und/oder formschlüssiges Mitnehmen der ersten Buchse bei einer vorbestimmten Drehstellung mit einer zweiten Buchse gekoppelt, wodurch die zweite Buchse ebenfalls rotatorisch angetrieben wird. In weiterer bevorzugter Ausführungsform der Erfindung können weitere zweite Buchsen durch Mitnahmemittel aneinander gekoppelt und in die vorbestimmte Drehstellung gebracht werden. Ist die erste und die zweite Buchse in eine Drehbewegung versetzt, so erfolgt ein axiales Heranführen entlang der Z-Achse der Materialstange an die erste Buchse, wobei die Materialstange an die Stirnseite der ersten Buchse angelegt und ein axialer Druck auf die Materialstange ausgeübt wird, während die erste Buchse weiter in Drehbewegung gehalten wird. Ist die Buchse durch die Drehbewegung in eine Drehstellung gelangt, bei der die erste Buchse bzw. deren Profilausnehmung zum Querschnittsprofil der Materialstange fluchtend ausgerichtet ist, so erfolgt das Einführen der Materialstange in die erste und in die zweite Buchse entlang der z-Achse.

Die weiteren Merkmale sowie weitere damit einhergehende Vorteile der Erfindung ergeben sich aus der nachfolgenden näheren Beschreibung bevorzugter Ausführungsbeispiele unter Bezugnahme auf die beigefügten Figuren. In den Figuren zeigen:
- Fig. 1A:: Eine schematische Darstellung einer in einer ersten Buchse gelagerten Materialstange;
- Fig. 1B bis 1C:: Eine schematische Darstellung von ersten Buchsen mit einer zentrischen und einer exzentrischen angeordneten Profilausnehmung;
- Fig. 2A bis 2C:: Eine schematische Darstellung mit einem an die erste Buchse gekoppelten Antriebsmittel;
- Fig. 3:: Eine perspektivische Ansicht eines Stangenlademagazins mit Buchsengestellen;
- Fig. 4a bis 4b:: Eine perspektivische Ansicht eines Buchsengestells mit zwei Buchsen;
- Fig. 5a bis 5d:: Ein alternatives Buchsengestell mit zwei Buchsen und einem Verbindungsrohr;
- Fig. 6:: Eine Querschnittsansicht durch ein Stangenlademagazin mit einer Buchsenausrichtvorrichtung;
- Fig. 7a bis 7b:: Eine Schwenkvorrichtung für eine Buchsenausrichtungsvorrichtung;
- Fig. 7c bis 7d:: Ein Seitenansicht und eine Querschnittsansicht einer Schwenkvorrichtung;
- Fig. 8a bis 8b:: Ein geöffnetes Stangenlademagazin in perspektivischer Ansicht mit einer Buchsenausrichtvorrichtung;
- Fig. 9:: Eine schematische Darstellung eines Verfahrens zum Ausrichten von ersten und zweiten Buchsen;
- Fig. 10a bis 10b:: Eine schematische Darstellung eines Verfahrens zum Ausrichten von ersten Buchsen an vorbestimmten Positionen;
- Fig. 11a bis 11b:: Eine schematische Darstellung eines Verfahrens zum Ausrichten von ersten Buchsen mit beweglichen Antriebsmitteln;

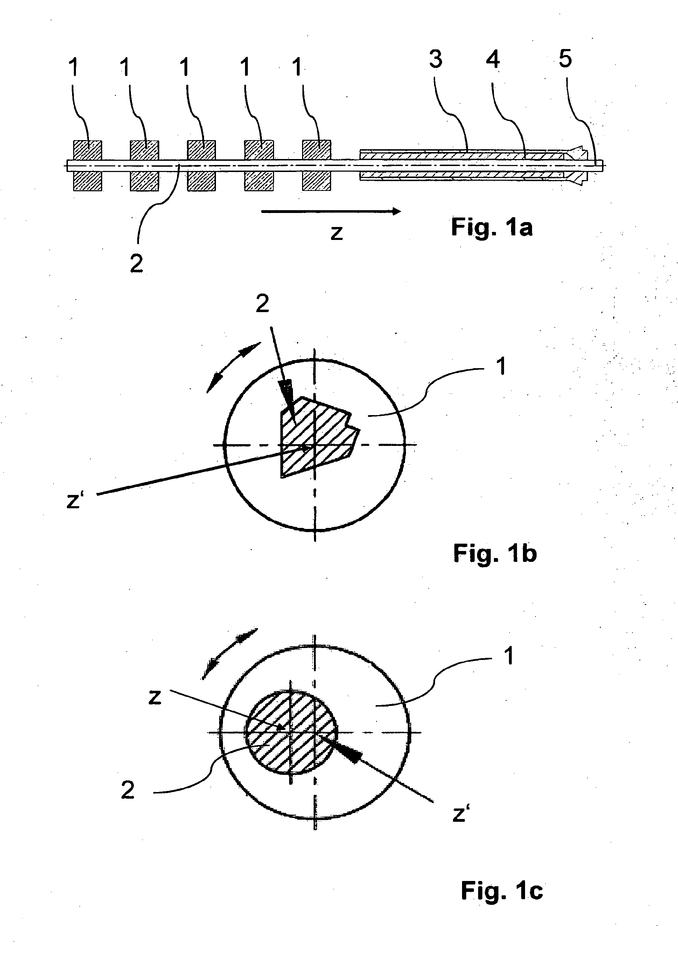

Fig. 1a zeigt schematisch eine Materialstange 2, welche entlang einer durch die Längsachse der Materialstange definierten z-Achse in Richtung des Pfeils gemäß Fig. 1a zunächst in fünf ersten Buchsen 1 eines Stangenlademagazins gelagert, und nach Durchlaufen durch die ersten Buchsen 1 rückseitig in die Hohlspindel 3 eines Drehautomaten geführt ist. Das Stangenlademagazin als solches und der Drehautomat sind in Fig. 1a nicht gezeigt. Ein in den Prozessraum des Drehautomaten hineinragender Überstand 5 der Materialstange 2 wird im Anschluss an die Bearbeitung abgetrennt und die Materialstange entlang der z-Achse in Richtung des Pfeils gemäß Fig. 1a nachgeschoben, wobei eine Fixierung in der Hohlspindel 3 durch ein Spannmittel 4 erfolgt.

Fig. 1b zeigt schematisch eine erste Buchse 1 gemäß Fig. 1a mit einer zentrisch zur, Rotationsachse (z') der Buchse angeordneten Profilausnehmung. In der ersten Buchse 1 bzw. der Profilausnehmung der ersten Buchse 1 ist eine mit einer Schraffur kenntlich gemachte, nicht-symmetrische, profilierte Materialstange 1 zentrisch gelagert und geführt. Rotationsachse (z') und z-Achse fallen folglich zusammen.

Fig. 1c zeigt schematisch eine erste Buchse 1 gemäß Fig. 1a mit einer exzentrisch zur Rotationsachse (z') der Buchse angeordneten Profilausnehmung. In der ersten Buchse 1 bzw. der Profilausnehmung der ersten Buchse 1 ist eine mit einer Schraffur kenntlich gemachte, zylindrische Materialstange 1 exzentrisch gelagert und geführt. Rotationsachse (z') und z-Achse verlaufen folglich parallel.

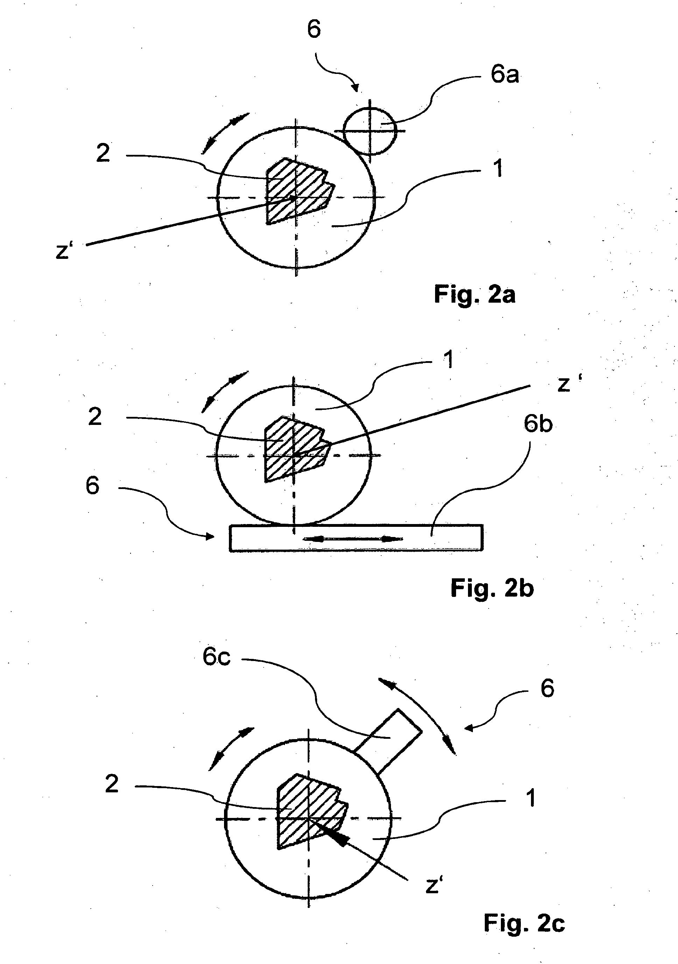

Die Figuren 2a bis 2c zeigen in einer schematischen Querschnittsansicht erste Buchsen 1 mit jeweils daran gekoppelten unterschiedlichen Antriebsmitteln 6 sowie mit jeweils einer mit einer Schraffur kenntlich gemachten, zentrisch gelagerten und geführten Materialstange 1. Die Antriebsmittel können die ersten Buchsen 1 in jeweils beide Drehrichtungen in Rotation versetzen. In Bezug auf die einzelnen Figuren zeigt Fig. 2a ein rotatorisch wirkendes Antriebsmittel, welches mittels eines Reibrades 6a als Kraftübertragungsmittel an die Mantelfläche der ersten Buchse 1 gekoppelt ist und auf diese Weise die Buchse um ihre Rotationsachse (z') in eine Drehbewegung versetzt.

Fig. 2b zeigt beispielhaft einen Linearantrieb 6b, welcher tangential an die Mantelfläche der ersten Buchse 1 gekoppelt ist. Fig. 2c zeigt schematisch einen mit der Mantelfläche der Buchse verbundenen, umlaufenden Antrieb 6c.

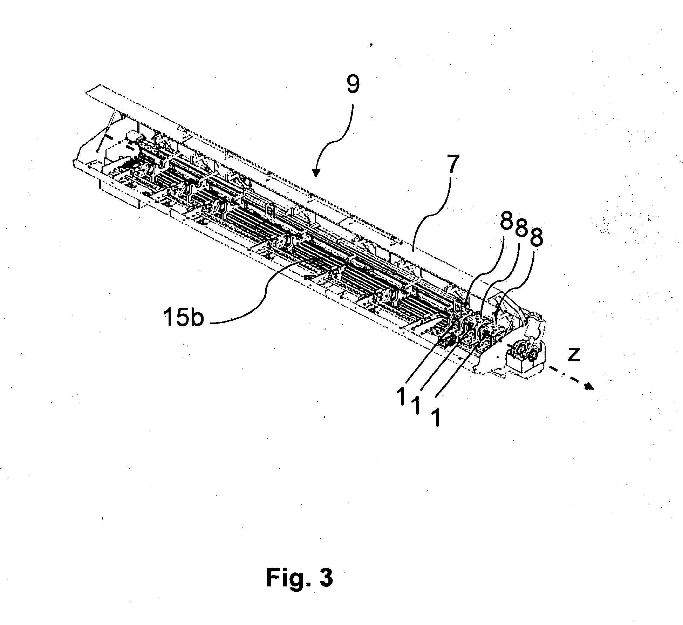

Fig. 3 zeigt ein Stangenlademagazin 9 nach dem Stand der Technik, in welches eine Materialstange 2 (in Fig. 3 nicht sichtbar) zur Lagerung und Führung an dem Drehautomaten entlang der z-Achse einzulegen ist. Das Stangenlademagazin 9 besitzt ein Gehäuse und eine Haube 7 zur Abdeckung. In dem Gehäuse des Stangenlademagazins 9 sind drei Buchsengestelle 8 angeordnet, welche entlang der z-Achse beweglich an einem Kettenantrieb 15b verfahrbar montiert sind und auf diese Weise entlang der z-Achse positionierbar sind. Innerhalb der Buchsengestelle 8 sind jeweils erste Buchsen 1 drehbar um eine parallel oder koaxial zur z-Achse ausgerichtete Rotationsachse z' angeordnet, wobei die Materialstange in die ersten Buchsen 1 der Buchsengestelle 8 einzuführen ist.

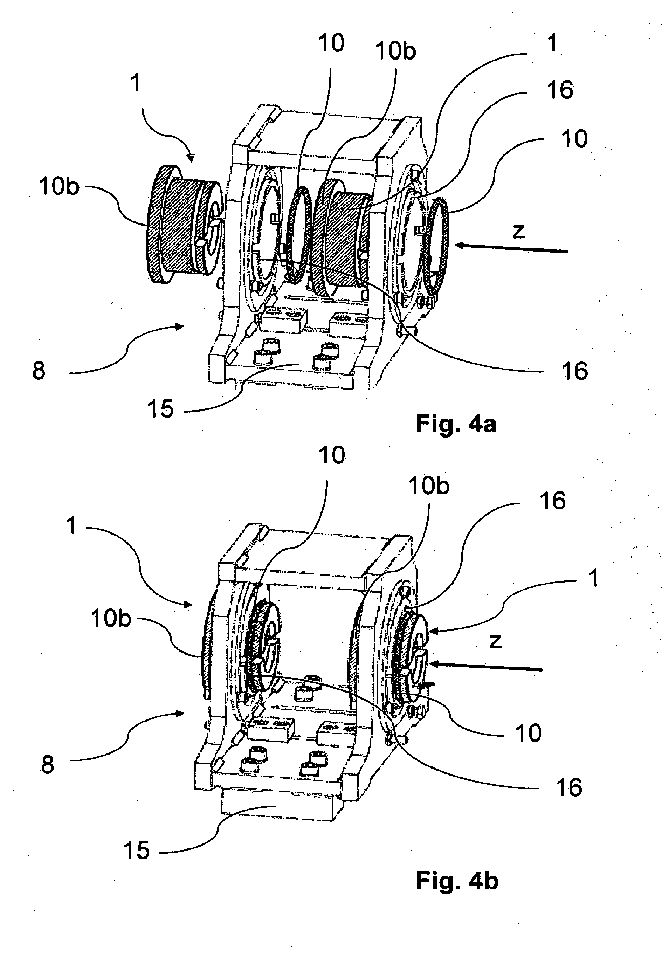

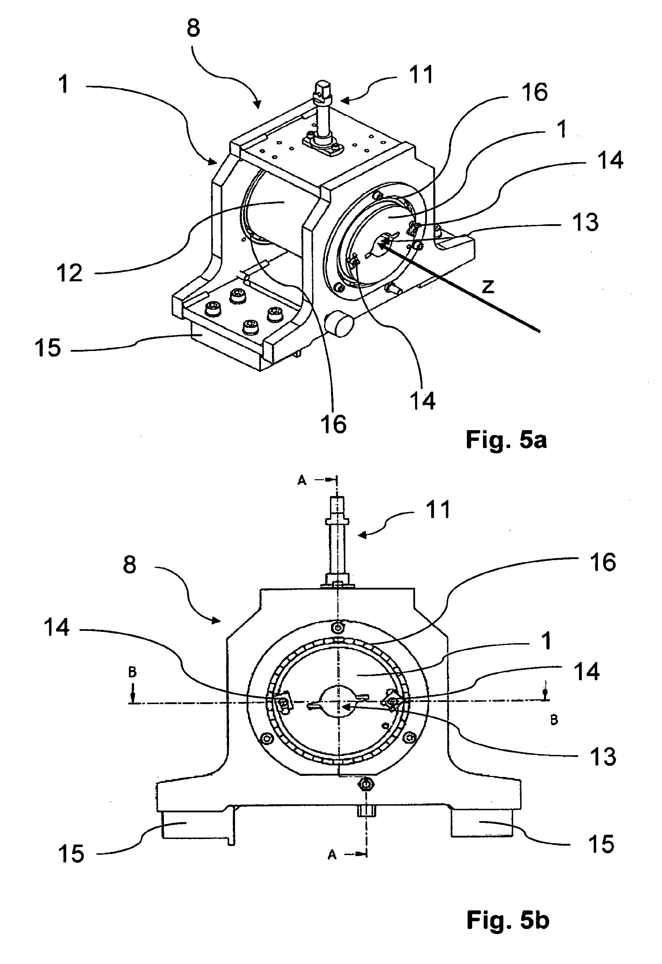

In den Figuren 4a und 4b sind perspektivische Detailansichten eines einzelnen Buchsengestells 8 aus Fig. 3 dargestellt, wobei Fig. 4a in einer Explosionsansicht die einzelnen Bauteile detailliert veranschaulicht und Fig. 4b die Buchsengestelle 8 in montierter Form darstellt. Das Buchsengestell 8 besitzt die Gestalt eines Rahmens mit jeweils zwei horizontalen Querträgern und zwei vertikalen Stützträgern und weist an dem unteren Querträger eine Kettenantriebsbefestigung 15 zur Verbindung dem Kettenantrieb 15b auf. In jeden der beiden vertikalen Stützträger ist in einem Kugellager 16 eine erste Buchse 1, zur Einführung einer Materialstange 2 (nicht gezeigt), eingesetzt. Die ersten Buchsen 1 weisen jeweils eine bezüglich ihrer Rotationsachse zentrale Profilausnehmung 13 (Fig. 5a, 5b) zur Einführung einer Materialstange auf. Die Öffnungen dieser Profilausnehmungen 13 sind dabei jeweils zur z-Achse hin ausgerichtet. Zur axialen Fixierung der ersten Buchsen 1 in den Kugellagern 16 besitzen diese jeweils einen einseitigen äußeren Rahmen 10b, welcher jeweils an der Axialfläche des inneren Rings des Kugellagers 16 anliegt, während auf der gegenüberliegenden Seite eines vertikalen Stützträgers die ersten Buchsen 1 jeweils mittels eines O-Rings 10 gesichert sind, welcher jeweils in eine Nut in der äußeren Mantelfläche einer ersten Buchse 1 eingelegt ist. Zum rotatorischen Antrieb der in einem derartigen Buchsengestell 8 gelagerten ersten Buchsen 1 kann z.B. jeweils eine Buchse mit einem Antriebsmittel 6 (bei Fign. 4a und 4b nicht gezeigt) entweder über deren äußere zylindrische Mantelfläche oder über die zylindrische Mantelfläche des einseitigen Rahmens 10b mit jeweils einem Reibrad gekoppelt werden.

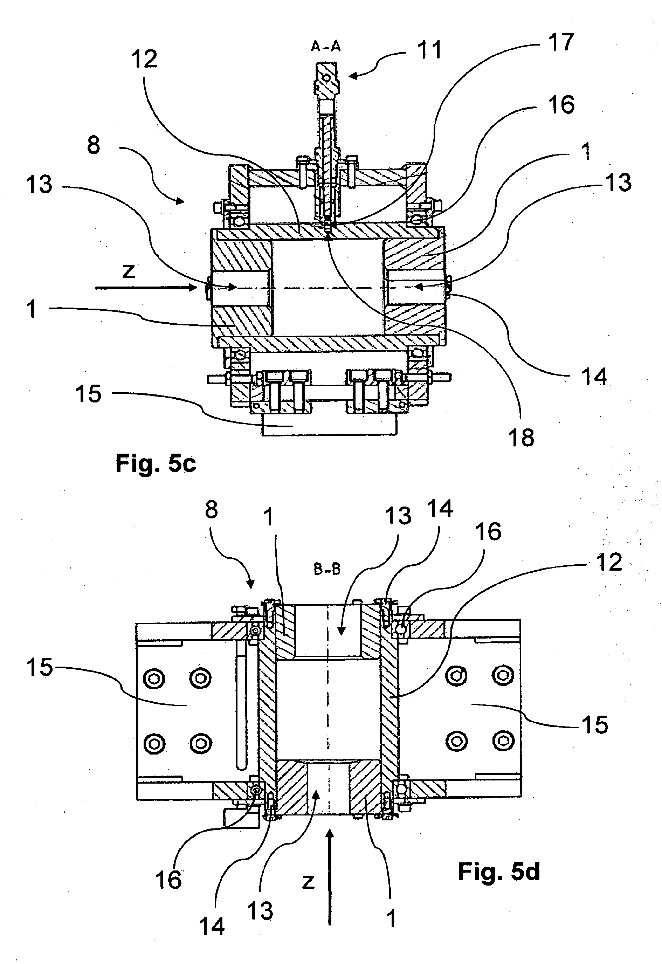

In den Figuren 5a bis 5d sind Buchsengestelle 8 mit darin angeordneten ersten Buchsen 1 in einer alternativen Ausführungsform dargestellt. Fig. 5A zeigt eine perspektivische Ansicht und die Fig. 5b eine Vorderansicht eines Buchsengestells 8 mit zwei darin angeordneten ersten Buchsen 1. Die Fig. 5c stellt das Buchsengestell 8 der Fig. 5b in einem Horizontalschnitt, und Fig. 5d in einem Vertikalschnitt dar. Das Buchsengestell 8 besitzt ebenfalls die Gestalt eines Rahmens mit jeweils zwei horizontalen Querträgern und zwei vertikalen Stützträgern und weist an dem unteren Querträger eine Kettenantriebsbefestigung 15 zur Verbindung mit einem Kettenantrieb 15b (nicht gezeigt) auf. In jeden der beiden vertikalen Stützträger ist in einem Kugellager 16 eine erste Buchse 1, zur Einführung einer Materialstange (nicht gezeigt), eingesetzt. Die ersten Buchsen 1 weisen ebenfalls jeweils eine bezüglich ihrer Rotationsachse zentrale Profilausnehmung 13 zur Einführung einer Materialstange auf. Die Öffnungen dieser Profilausnehmungen 13 sind dabei jeweils zur z-Achse hin ausgerichtet.

Zur Koppelung mit einem Antriebsmittel 6 über Reibrad 6a (beides nicht in den Fig. 5a bis 5d gezeigt) der in dem Buchsengestell 8 gelagerten beiden ersten Buchsen 1 sind diese innerhalb des Buchsengestells 8 mittels eines zylindrischen Verbindungsrohrs 12 axial miteinander verbunden. An der äußeren zylindrischen Mantelfläche dieses Verbindungsrohres 12 kann ein Reibrad angreifen. Die beiden ersten Buchsen 1 sind in das Verbindungsrohr axial eingesetzt und auf diese Weise auswechselbar. Zur axialen Sicherung der beiden ersten Buchsen 1 sind an dem Verbindungsrohr beidseitig an dessen zylindrischen Stirnseiten Sicherungsmittel 14 in Form eines Aufnahmebolzens und einer Sicherungsfeder angebracht, welche die ersten Buchsen 1 gegen ein Herausfallen aus dem Innenrohr absichern. Zur Sicherung gegen Verdrehen um die z-Achse der ersten Buchsen 1 sind diese bevorzugt entweder formschlüssig in das Verbindungsrohr 12 oder mit diesem über Mitnahmemittel verbunden. Ferner ist bei den Fig. 5a und 5b ein an dem Buchsengestell 8 angeordnetes Haltemittel 11 dargestellt.

Fig. 5c zeigt ein solches an dem Buchsengestell 8 angeordnetes Haltemittel 11, welches mittels eines Eingriffsmittels 17 in eine als Positionsgeber 11b wirkende Aufnahme 18 in der äußeren Mantelfläche des Verbindungsrohres 12 eingreifen kann und somit die beiden ersten Buchsen 1 zur zueinander fluchtenden Ausrichtung in einer vorbestimmten Drehstellung anhalten kann. Das Haltemittel ist pneumatisch betätigt und kann auch pneumatisch gelöst werden.

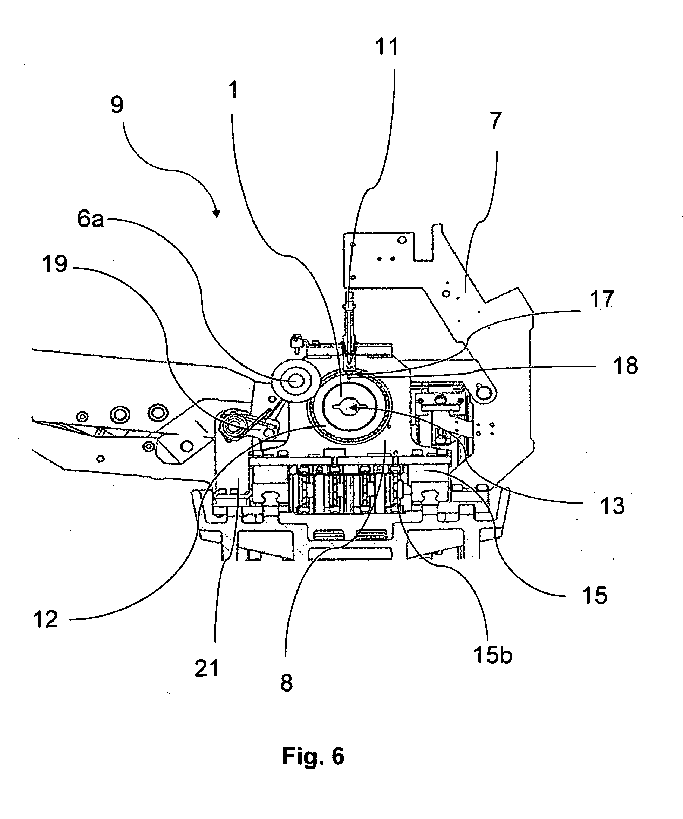

Figur 6 zeigt einen Vertikalschnitt durch ein Stangenlademagazin 9 mit einer darin angeordneten Buchsenausrichtungsvorrichtung und mit einem Buchsengestell 8 der Figuren 5a bis 5d, welches mittels einer Kettenantriebsbefestigung 15 an einem Kettenantrieb 15b des Stangenlademagazins 9 montiert ist. An die äußere Mantelfläche des Verbindungsrohres 12 ist ein Reibrad 6a gekoppelt, so dass die beiden in dem Buchsengestell, innerhalb des Verbindungsrohres 12 angeordneten ersten Buchsen 1 um die z-Achse, welche aus der Figurenfläche herausragt, angetrieben werden können und somit die Profilausnehmungen 13 der beiden ersten Buchsen 1 (in Fig. 6 ist nur eine erste Buchse sichtbar) in ihrer Drehstellung ausrichtbar sind.

Zur Koppelung bzw. zur Entkoppelung des Reibrades 6a mit den beiden ersten Buchsen 1 bzw. mit deren Verbindungsrohr 12 ist eine Schwenkvorrichtung 19 vorgesehen, welche mittels einer Grundplatte 21 in dem Gehäuse des Stangenlademagazins 9 befestigt ist. Das Reibrad ist hierzu drehbar an einem Schwenkarm (nicht in Fig. 6 gezeigt) angebracht.

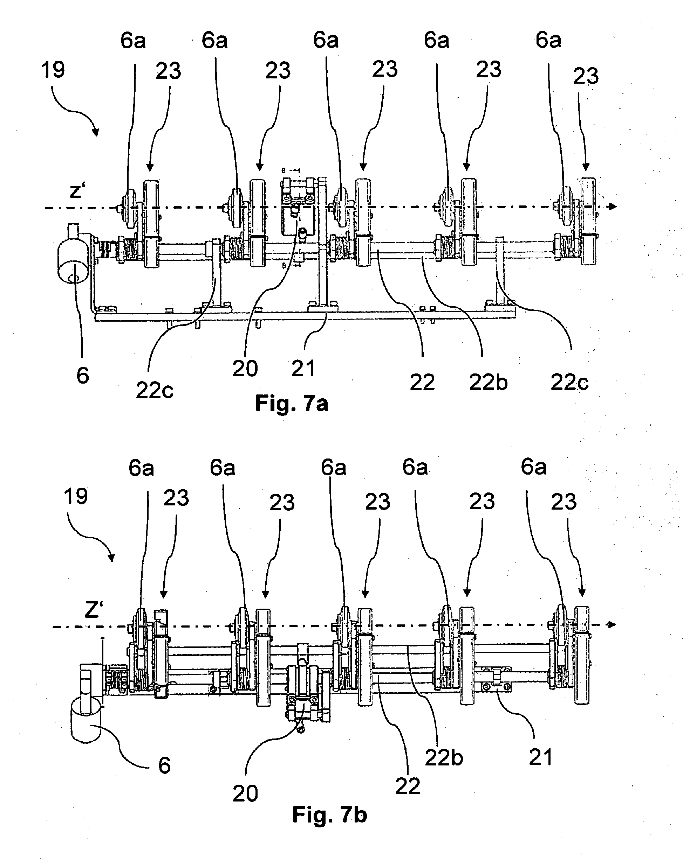

Eine Schwenkvorrichtung 19 der Fig. 6 ist in einer Detailansicht in den Fig. 7a und 7b gezeigt. Fig. 7a zeigt eine Seitenansicht und Fig. 7b eine Draufsicht der Schwenkvorrichtung 19. Die Schwenkvorrichtung 19 weist eine Grundplatte 21 zur Befestigung in dem Stangenlademagazin 19 (nicht gezeigt) auf. Die Schwenkvorrichtung 19 weist fünf Reibräder 6a auf, welche entlang der Rotationsachse z' angeordnet sind und kann somit fünf erste Buchsen 1 direkt antreiben bzw. ist für den direkten Antrieb von fünf Buchseneinheiten einsetzbar ist. Die Reibräder 6a werden jeweils über Kettenantriebe 23 rotatorisch angetrieben, welche nicht sichtbar in den Fig. 7a und 7b von Schutzabdeckungen verdeckt sind. Die Reibräder 6a werden über ein zentrales Antriebsmittel 6 angetrieben, welches linksseitig an der Schwenkvorrichtung 19 angebracht ist. Zur Kraftübertragung des Antriebsmittels 6 auf die Kettenantriebe 23 ist an der Schwenkvorrichtung 19 entlang der Rotationsachse z' eine mit dem Antriebsmittel 6 verbunden Antriebswelle 22 angeordnet, welche in mit der Grundplatte 21 verbundenen Lagerböcken 22c gelagert ist.

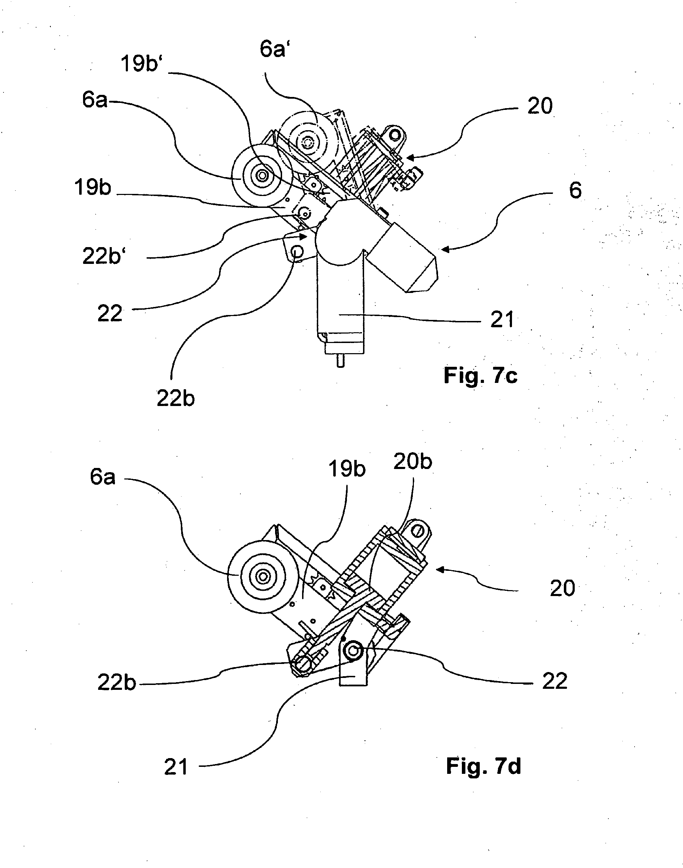

Die Schwenkvorrichtung weist einen Positionierungsantrieb 20 auf, welcher an einem zentral angeordneten Lagerbock 22c montiert ist. Die Fig.7c und 7d zeigen eine Detailansicht dieses Positionierungsantriebs 20, wobei Fig. 7c eine Seitenansicht und Fig. 7d eine Vertikalschnitt durch den Positionierantrieb 20 der Schwenkvorrichtung 19 der Fig. 7a und 7b zeigt. Der Positionierantrieb weist einen Zylinderantrieb 20b auf, der zweckmäßig elektrisch oder pneumatisch betätigbar ist. Dieser stützt sich gegen eine Stützachse 23, welche die Schwenkarme 19b, in welchen die Reibräder 6a gelagert sind, mechanisch verbindet (Fig. 7d). Bei einer Betätigung des Zylinderantriebs 20b werden somit die in der Antriebswelle 22 gelagerten Schwenkarme 19b' sowie die Reibräder 6a' um die Antriebswelle 22 geschwenkt (Fig. 7c).

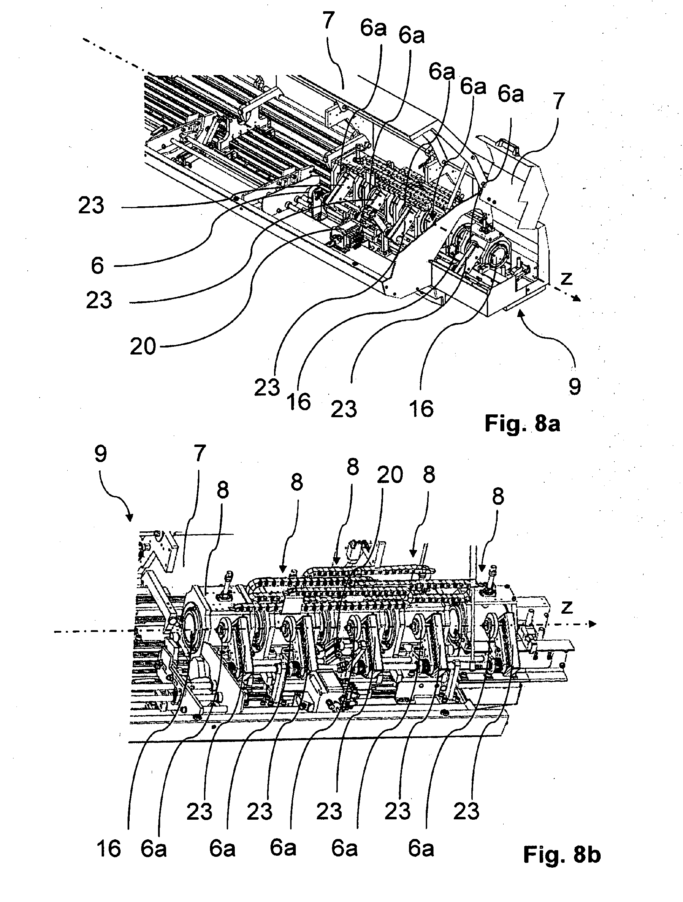

Die Figuren 8a und 8b zeigen eine perspektivische Ansicht einer Buchsenausrichtvorrichtung in einem geöffneten Stangenlademagazin 9. Dieses besitzt eine Abdeckhaube 7. In dem Stangenlademagazin 9 ist weder eine in z-Richtung einzuführende Materialstange 2 dargestellt, noch sind erste Buchsen 1 in den Kugellagern 16 eingesetzt. Die Figuren 8a und 8b zeigen fünf Buchseneinheiten 8 gemäß der Figuren 5a bis 5d, welche mittels eines Kettenantriebs 15b entlang der z-Achse positionierbar, das heißt verfahrbar sind. An die Mantelflächen der Verbindungsrohre 12 (nicht gezeigt) dieser Buchseneinheiten greifen die Reibräder 6a an (Fig. 8b).

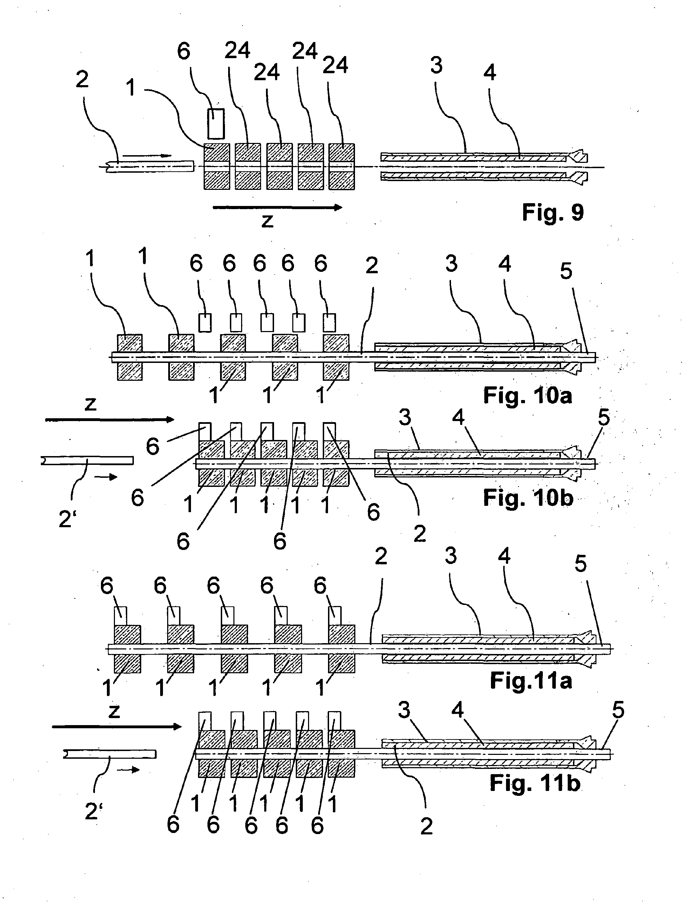

Die Figur 9 zeigt stark schematisiert ein Verfahren zur Ausrichtung von Buchsen, welches mittels der vorhergehend beschriebenen Buchsenausrichtvorrichtung durchgeführt wird und umfasst in einem ersten Schritt das rotatorische Antreiben einer ersten Buchse 1 durch das Antriebsmittel 6. In einem zweiten anschließenden Schritt wird die erste Buchse 1 durch reib- und/oder formschlüssiges Mitnehmen der ersten Buchse 1 bei einer vorbestimmten Drehstellung mit einer zweiten Buchse 24 gekoppelt, wodurch die zweite Buchse 24 anschließend ebenfalls rotatorisch angetrieben wird. In einer alternativen Ausführungsform können weitere zweite Buchsen 24 durch Mitnahmemittel aneinander gekoppelt und in die vorbestimmte Drehstellung gebracht werden.

Ist die erste und die zweite Buchse in eine Drehbewegung versetzt, so erfolgt ein axiales Heranführen der Materialstange entlang der z-Achse an die erste Buchse, wobei die erste Buchse entweder durch ein Haltemittel in einer vorbestimmte Drehstellung angehalten wird oder die Materialstange 2 an die Stirnseite der ersten Buchse 1 angelegt und ein axialer Druck auf die Materialstange 2 ausgeübt wird, während die erste und die zweite Buchse weiter in einer langsamen Drehbewegung gehalten werden, so dass die Materialstange bei Erreichen der vorbestimmten Drehstellung in die Profilausnehmung 13 (nicht gezeigt) der ersten Buchse 1 hineingleiten kann.

Ist die Buchse entweder durch das Haltemittel oder durch die langsam erfolgte Drehbewegung in eine vorbestimmte Drehstellung gelangt, bei der die erste Buchse 1 bzw. deren Profilausnehmung 13 zum Querschnittsprofil der Materialstange fluchtend ausgerichtet ist und die Materialstange in die erste Buchse hineingleiten kann, so erfolgt ein axiales Einführen der Materialstange 2 in die erste und in die zweite Buchse 1 bzw. 24 entlang der z-Achse sowie das in Bezug auf alle Buchsen rückseitige Einführen der Materialstange in die Hohlspindel 3 des Drehautomaten und das Fixieren mit einem Spannmittel 4.

Die Figuren 10a und 10b zeigen schematisch ein weiteres vorteilhaftes Verfahren zur Ausrichtung von ersten Buchsen in einem Stangenlademagazin, welches ebenfalls mittels der vorhergehend beschriebenen Buchsenausrichtvorrichtung durchgeführt werden kann. Dabei wird in Fig. 10a eine in einem Betriebszustand in fünf ersten Buchsen 1 gelagerte und geführte Materialstange 2 dargestellt, welche rückseitig in Bezug auf alle Buchsen in die Spindel 3 eines Drehautomaten (nicht gezeigt) eingeführt und ein über die Spindel 3 hinausragender, und also in den Prozessraum des nicht gezeigten Drehautomaten hineinragender Überstand 5 der Materialstange 2 durch ein Spannmittel 4 fixiert ist. Die Materialstange 2 wird in den ersten Buchsen 1 entlang der z-Achse mit gleichmäßigen Abstand gelagert und geführt, wobei die ersten Buchsen 1 entlang der z-Achse beweglich angeordnet, das heißt verfahrbar sind. Da der bearbeitete Überstand 5 der Materialstange 2 nach dem Bearbeitungsprozess in dem Prozessraum des Drehautomaten abgetrennt wird und die Materialstange entlang der z-Achse in den Drehautomaten zur weiteren Bearbeitung nachgeführt wird, wird die Materialstange 2 während des Bearbeitungsprozesses stetig kürzer, wobei die ersten Buchsen 1 durch die Steuerung des Drehautomaten und/oder des Stangenlademagazins zweckmäßig ebenfalls entlang der z-Achse nachgeführt werden können, so dass möglichst jeweils ein gleichmäßiger Abstand der ersten Buchsen zueinander erhalten bleibt und alle Buchsen so lang als möglich weiterhin zur Führung der Materialstange dienen.

In Fig. 10b ist ein Endzustand eines Bearbeitungsprozesses der zu bearbeitenden Materialstange 2 bezüglich deren Lagerung und Führung schematisch dargestellt, wobei alle fünf ersten Buchsen stirnseitig nebeneinander anliegen. In dieser Längsposition der ersten Buchsen sind feststehende Antriebsmittel 6 zum rotatorischen Antrieb der ersten Buchsen 1 bezüglich der z-Achse vertikal über der Mantelfläche der Buchse angeordnet und können infolgedessen an die ersten Buchsen 1 zu deren rotatorischen Antrieb angekoppelt werden. Auf diese Weise können die ersten Buchsen 1 zum Querschnittsprofil einer weiteren in dem Stangenlademagazin einzulegenden und zu führenden Materialstange 2' entsprechend so ausgerichtet werden, so dass diese unmittelbar, das heißt ohne wesentliche Zeitverzögerung, bearbeitet werden kann und ein kontinuierlicher Materialfluss in dem Stangenlademagazin bzw. im dem Drehautomaten ermöglicht ist.

Die Figuren 11a und 11b zeigen schematisch ein alternatives vorteilhaftes Verfahren zur Ausrichtung von ersten Buchsen in einem Stangenlademagazin, welches ebenfalls mittels der vorhergehend beschriebenen Buchsenausrichtvorrichtung durchgeführt werden kann. Im Unterschied zu dem in den Figuren 10a und 10b dargestellten Verfahren sind bei diesem Verfahren die Antriebsmittel 6 zusammen mit den ersten Buchsen 1 entlang der z-Achse ebenfalls verfahrbar und werden mit den ersten Buchsen 1 durch die Steuerung mitgeführt.

In einem weiteren alternativen Verfahren wird die Materialstange 2 im Unterschied zu den in den Figuren 10a bis 11b beschriebenen Verfahren sowohl zumindest in einer ersten Buchse 1 als auch in einer zweite Buchse 24 gelagert und geführt. Zum rotatorischen Antrieb kann in einem solchen Fall zweckmäßig vorgesehen sein, dass lediglich der ersten Buchsen 1 ein Antriebsmittel 6 zugeordnet ist, während die zweite Buchse 24 bei diesem Verfahren durch ein Mitnahmemittel, welches an der ersten und/oder an der zweiten Buchsen 24 angeordnet ist, an die erste Buchse 1 axial gekoppelt wird, so dass die zweite Buchse 24 ebenfalls in eine Drehbewegung versetzt, und in eine vorbestimmte Drehstellung ausgerichtet wird.

### Bezugszeichenliste:

- 1: erste Buchse
- 2, 2': Materialstange
- 3.: Spindel des Drehautomaten
- 4.: Spannmittel
- 5.: Überstand
- 6.: Antriebsmittel
- 6a.: Reibrad
- 6b.: Linearantrieb
- 6c.: Umlaufender Antrieb
- 7.: Haube
- 8.: Buchsengestell
- 9.: Stangenlademagazin
- 10.: O-Ring
- 10b.: Rahmen
- 11.: Halteeinrichtung
- 11b.: Positionsgeber
- 12.: Verbindungsrohr
- 13.: Profilausnehmung
- 14.: Sicherungsmittel
- 15.: Kettenantriebsbefestigung
- 15b.: Kettenantrieb
- 16.: Kugellager
- 17.: Eingriffsmittel
- 18.: Aufnahme
- 19.: Schwenkvorrichtung
- 19b.: Schwenkarm
- 20b.: Zylinderantrieb
- 20.: Positionierantrieb
- 21.: Grundplatte
- 22.: Antriebswelle
- 22b.: Stützachse
- 22c.: Lagerbock
- 23.: Kettenantrieb
- 24.: zweite Buchse
- z: z-Achse
- z': Rotationsachse

## Patentansprüche

1. Buchsenausrichtvorrichtung eines Stangenlademagazins (9) zum Führen von Materialstangen (2) an einem Drehautomaten, wobei durch die Längsachse einer in der Stangenladevorrichtung geführten Materialstange (2) eine z-Achse (z) definiert ist,
**dadurch gekennzeichnet, dass**
in dem Stangenlademagazin eine Vielzahl von entlang der z-Achse (z) bewegliche erste Buchsen (1) angeordnet sind, in welche die Materialstange (2) zu deren Bearbeitung in dem Drehautomaten entlang der z-Achse (z) einzuführen ist, und dass
sich durch die ersten Buchsen (1) eine entweder koaxial oder parallel zur z-Achse (z) angeordnete Rotationsachse (z') erstreckt, um welche die ersten Buchsen (1) drehbar gelagert sind und dass Reibräder (6a) als Antriebsmittel (6) umfasst sind, welche zur Kraftübertragung reibschlüssig an die ersten Buchsen (1) koppelbar sind und die von einem Linearmotor, von einem rotatorisch wirkenden Motor und/oder von einem Stellmotor, insbesondere von einem Servomotor, angetrieben werden, und zwar zum rotatorischen Antrieb der ersten Buchsen (1) um die Rotationsachse (z') derart, dass die ersten Buchsen (1) und das Querschnittsprofil der Materialstange (2) zum Einführen der Materialstange (2) zueinander fluchtend ausrichtbar sind, und dass ferner Halteeinrichtungen (11) vorgesehen sind, welche die ersten Buchsen (1) zur zueinander fluchtenden Ausrichtung in einer vorbestimmten Drehstellung gegenüber dem Querschnittsprofil der Materialstange (2) anhalten.

2. Buchsenausrichtvorrichtung gemäß Anspruch 1, wobei zur Erfassung der vorbestimmten Drehstellung ein an der ersten Buchse (1) angeordneter Positionsgeber (11b) vorgesehen ist, mit welchem die Halteeinrichtung (11) zusammenwirkt, wobei als Positionsgeber (11b) insbesondere eine an den ersten Buchsen (1) angeordnete Aufnahme (18) vorgesehen ist, in welche ein in dem Stangenlademagazin angeordnetes Eingriffsmittel (17) als Halteeinrichtung (11) eingreifen kann, und/oder eine an den ersten Buchsen (1) angeordnete, optisch oder elektronisch erfassbare Codierung vorgesehen ist, wobei der Halteeinrichtung (11) eine Auswerteeinrichtung zur Auswertung dieser Codierung zugeordnet ist.

3. Buchsenausrichtvorrichtung gemäß einem der vorgenannten Ansprüche, wobei die Antriebsmittel (6) mit den ersten Buchsen (1) wahlweise gekoppelt oder entkoppelt werden können, insbesondere durch eine Schwenkvorrichtung (19), an welcher die Antriebsmittel (6) angebracht sind und welche zur Kopplung mit den ersten Buchsen (1) an diese geschwenkt werden kann.

4. Buchsenausrichtvorrichtung gemäß einem der vorgenannten Ansprüche, wobei die Antriebsmittel (6) eine Kupplung aufweisen, welche insbesondere selbsttätig drehmomentgeschaltet ist.

5. Buchsenausrichtvorrichtung gemäß einem der vorgenannten Ansprüche, wobei die Antriebsmittel (6) entlang der z-Achse (z) beweglich sind.

6. Buchsenausrichtvorrichtung eines Stangenlademagazins (9) zum Führen von Materialstangen (2) an einem Drehautomaten, insbesondere gemäß einem der vorgenannten Ansprüche,
wobei durch die Längsachse einer in der Stangenladevorrichtung geführten Materialstange (2) eine z-Achse (z) definiert ist, und
wobei in dem Stangenlademagazin eine erste Buchse (1) angeordnet ist, in welche die Materialstange (2) zu deren Bearbeitung in dem Drehautomaten entlang der z-Achse (z) einzuführen ist,
wobei sich durch die erste Buchse (1) eine entweder koaxial oder parallel zur z-Achse (z) angeordnete Rotationsachse (z') erstreckt, um welche die erste Buchse (1) drehbar gelagert ist und wobei wenigstens ein Antriebsmittel (6) umfasst ist, welches wenigstens mit der ersten Buchse (1) koppelbar ist, und zwar zum rotatorischen Antrieb der ersten Buchse (1) um die Rotationsachse (z') derart, dass die erste Buchse (1) und das Querschnittsprofil der Materialstange (2) zum Einführen der Materialstange (2) zueinander fluchtend ausrichtbar sind, **dadurch gekennzeichnet, dass** in der Stangenladevorrichtung eine zweite Buchse (24) beweglich entlang der z-Achse (z) angeordnet ist, und dass sich durch die zweite Buchse (24) eine entweder koaxial oder parallel zur z-Achse (z) angeordnete Rotationsachse (z') erstreckt, um welche die zweite Buchse (24) drehbar gelagert angeordnet ist, und dass in die zweite Buchse (24) die Materialstange (2) entlang der z-Achse (z) einzuführen ist, und dass die erste und die zweite Buchse (24) komplementär zueinander ausgebildete Mitnahmemittel aufweisen, insbesondere in Art von Reibflächen und/oder magnetisch wirkenden Flächen und/oder eines Eingriffsmittel und einer Aufnahme, so dass die erste und die zweite Buchse (24) reib- und/oder formschlüssig miteinander koppelbar sind, derart, dass bei Drehung der ersten Buchse (1) diese die zweite Buchse (24) mitnimmt.

7. Verfahren zur Ausrichtung von Buchsen (1) mittels einer Buchsenausrichtvorrichtung gemäß einem der Ansprüche 1 bis 5, umfassend folgende Schritte:
a1) rotatorisches Antreiben der ersten Buchsen (1) durch das Antriebsmittel (6),
b) Einführen der Materialstange (2) in die ersten Buchsen (1) entlang der z-Achse, wobei vor dem Einführen der Materialstange (2) die ersten Buchsen (1) in einer vorbestimmten Drehstellung zur zueinander fluchtenden Ausrichtung gegenüber dem Querschnittsprofil der Materialstange (2) angehalten werden.

8. Verfahren zur Ausrichtung von Buchsen (1, 24) mittels einer Buchsenausrichtvorrichtung gemäß Anspruch 6, umfassend folgende Schritte:
a1) rotatorisches Antreiben der ersten Buchse (1) durch das Antriebsmittel (6),
b) Einführen der Materialstange (2) in die erste Buchse (1) entlang der z-Achse.

9. Verfahren nach Anspruch 8, wobei nach Schritt a1) und vor Schritt b) der Schritt:
a2) eines Reib- und/oder formschlüssiges Koppeln der ersten Buchse (1) mit wenigstens einer zweiten Buchse (24) ausgeführt wird,
und bei Schritt b):
zusätzlich die Materialstange (2) in die zweite Buchse (24) entlang der z-Achse (z) eingeführt wird.

10. Verfahren nach Anspruch 8 oder 9, wobei vor dem Einführen der Materialstange (2) die erste und/oder die zweite Buchse (24) in einer vorbestimmten Drehstellung zur zueinander fluchtenden Ausrichtung gegenüber dem Querschnittsprofil der Materialstange (24) angehalten wird

## Claims

1. Socket alignment device for a bar loading magazine (9) for guiding bars (2) of material to an automatic lathe, wherein a z-axis (z) is defined through the longitudinal axis of a bar (2) of material guided in the bar loading device,
**characterised in that**
in the bar loading magazine a plurality of first sockets (1) which move along the z-axis (z) are disposed, into which the bar (2) of material is to be introduced along the z-axis (z) in order to be worked in the automatic lathe, and that
an axis of rotation (z') disposed either coaxially to or in parallel with the z-axis (z) extends through the first sockets (1), the first sockets (1) being rotatably mounted about said axis of rotation, and that friction wheels (6a) are included as drive means (6) and can be coupled to the first sockets (1) in a filctionally engaged manner for force transmission purposes and which are driven by a linear motor, by a rotationally acting motor and/or by an actuator motor, in particular a servomotor, and in particular for rotary drive of the first sockets (1) about the axis of rotation (z') such that the first sockets (1) and the cross-sectional profile of the bar (2) of material can be aligned flush with one another for introduction of the bar (2) of material, and that furthermore, holding devices (11) are provided which hold the first sockets (1) for mutually flush alignment in a predetermined rotational position with respect to the cross-sectional profile of the bar (2) of material.

2. Socket alignment device as claimed in claim 1, wherein in order to detect the predetermined rotational position, a position transmitter (11b) is provided disposed on the first socket (1) and with which the holding device (11) cooperates, wherein as position transmitter (11b) in particular a receiving means (18) disposed on the first sockets (1) is provided, into which an engagement means (17) as a holding device (11) disposed in the bar loading magazine can engage, and/or optically or electronically detectable encoding disposed in the first sockets (1) is provided, wherein the holding device (11) is allocated an evaluation device to evaluate this encoding.

3. Socket alignment device as claimed in any one of the preceding claims, wherein the drive means (6) can be selectively coupled to or decoupled from the first sockets (1), in particular by a pivot device (19) to which the drive means (6) are attached and which, for coupling to the first sockets (1), can be pivoted thereto.

4. Socket alignment device as claimed in any one of the preceding claims, wherein the drive means (6) comprise a coupling which is in particular automatically torque-switched.

5. Socket alignment device as claimed in any one of the preceding claims, wherein the drive means (6) can move along the z-axis (z).

6. Socket alignment device for a bar loading magazine (9) for guiding bars (2) of material to an automatic lathe, in particular as claimed in any one of the preceding claims, wherein a z-axis (z) is defined by the longitudinal axis of a bar (2) of material guided in the bar loading device, and
wherein in the bar loading magazine a first socket (1) is disposed into which the bar (2) of material is introduced along the z-axis (z) in order to be worked in the automatic lathe,
wherein an axis of rotation (z') disposed either coaxial to or in parallel with the z-axis (z) extends through the first socket (1), the first socket (1) being rotatably mounted about said axis of rotation, and wherein at least one drive means (6) is included which can be coupled at least to the first socket (1), and in particular for rotary driving of the first socket (1) about the axis of rotation (z') such that the first socket (1) and the cross-sectional profile of the bar (2) of material can be aligned flush with one another for introduction of the bar (2) of material, **characterised in that** in the bar loading device, a second socket (24) is movably disposed along the z-axis (z), and that an axis of rotation (z') disposed either coaxial to or in parallel with the z-axis (z) extends through the second socket (24), the second socket (24) being disposed so as to be able to rotate about this axis of rotation, and that the bar (2) of material is to be introduced into the second socket (24) along the z-axis (z), and that the first and the second socket (24) comprise entrainment means formed to complement one another, in particular in the manner of friction surfaces and/or magnetically acting surfaces and/or of an engagement means and of a receiving means so that the first and second socket (24) can be coupled to one another in a fractionally engaged and/or form-locking manner such that upon rotation of the first socket (1) this socket entrains the second socket (24).

7. Method of aligning sockets (1) by means of a socket alignment device as claimed in any one of claims 1 to 5, comprising the following steps:
a1) rotationally driving the first socket (1) by the drive means (6),
b) introducing the bar (2) of material into the first sockets (1) along the z-axis, wherein before introduction of the bar (2) of material, the first sockets (1) are held in a predetermined rotational position for the purpose of mutually flush alignment with respect to the cross-sectional profile of the bar (2) of material.

8. Method of aligning sockets (1,24) by means of a socket alignment device as claimed in claim 6, comprising the following steps:
a1) rotationally driving the first socket (1) by the drive means (6),
b) introducing the bar (2) of material into the first socket (1) along the z-axis.

9. Method as claimed in claim 8, wherein after step a1) and before step b) the step;
a2) of frictionally engaged and/or form-locking coupling of the first socket (1) to at least one second socket (24) is carried out,
and in step b):
additionally the bar (2) of material is introduced into the second socket (24) along the z-axis (z).

10. Method as claimed in claim 8 or 9, wherein, before the introduction of the bar (2) of material, the first and/or the second socket (24) are held in a predetermined rotational position for mutually flush alignment with respect to the cross-sectional profile of the bar (24) of material.

## Revendications

1. Dispositif d'alignement de guides d'un magasin de chargement de barres (9) destiné au guidage de barres de matière (2) sur un tour automatique, où un axe z (z) est défini par l'axe longitudinal d'une barre de matière (2) guidée dans le dispositif de chargement de barres,
**caractérisé en ce que**
une pluralité de premiers guides (1) mobiles le long de l'axe z (z) est disposée dans le magasin de chargement de barres, la barre de matière (2) devant être introduite dans ceux-ci le long de l'axe z (z) pour être usinée dans le tour automatique, et **en ce qu'**
un axe de rotation (z') soit coaxial, soit parallèle à l'axe z (z) s'étend au travers des premiers guides (1), les premiers guides (1) étant montés de manière rotative autour de celui-ci, et **en ce que** des roues de friction (6a) sont comprises comme moyens d'entraînement (6), lesquelles peuvent être accouplées aux premiers guides (1) pour transmission de force par friction et peuvent être entraînées par un moteur linéaire, par un moteur à action rotative et/ou par un moteur de réglage, en particulier par un servomoteur, et cela pour l'entraînement en rotation des premiers guides (1) autour de l'axe de rotation (z'), de telle manière que les premiers guides (1) et le profil de section transversale de la barre de matière (2) peuvent être alignés entre eux pour l'insertion de la barre de matière (2), et **en ce que** des dispositifs de maintien (11) sont en outre prévus, lesquels maintiennent les premiers guides (1) par rapport au profil de section transversale de la barre de matière (2), pour alignement de ceux-ci dans une position de rotation prédéfinie les uns par rapport aux autres.

2. Dispositif d'alignement de guides selon la revendication 1, où un capteur de position (11b) est prévu sur le premier guide (1) pour détecter la position de rotation prédéfinie, avec lequel coopère le dispositif de
maintien (11), un logement (18) ménagé sur les premiers guides (1) étant en particulier prévu comme capteur de position (11b), dans lequel peut s'engager un moyen d'engagement (17) disposé dans le magasin de chargement de barres en tant que dispositif de maintien (11), et/ou où un codage détectable optiquement ou électroniquement disposé sur les premiers guides (1) est prévu, le dispositif de maintien (11) étant un dispositif d'analyse destiné à analyser ledit cordage.

3. Dispositif d'alignement de guides selon l'une des revendications précédentes, où les moyens d'entraînement (6) peuvent être sélectivement accouplés aux premiers guides (1) ou désaccouplés de ceux-ci, en particulier au moyen d'un dispositif de pivotement (19), contre lequel les moyens d'entraînement (6) sont appliqués et qui peut être pivoté contre-ceux-ci pour accouplement avec les premiers guides (1).

4. Dispositif d'alignement de guides selon l'une des revendications précédentes, 1 où les moyens d'entraînement (6) comportent un embrayage qui est en particulier automatiquement commandé par couple.

5. Dispositif d'alignement de guides selon l'une des revendications précédentes, où les moyens d'entraînement (6) sont mobiles le long de l'axe z (z).

6. Dispositif d'alignement de guides d'un magasin de chargement de barres (9) destiné au guidage de barres de matière (2) sur un tour automatique, en particulier selon l'une des revendications précédentes, où un axe z (z) est défini par l'axe longitudinal d'une barre de matière (2) guidée dans le dispositif de chargement de barres, et
où un premier guide (1) est disposé dans le magasin de chargement de barres, la barre de matière (2) devant être introduite dans celui-ci le long de l'axe z (z) pour être usinée dans le tour automatique,
où un axe de rotation (z') soit coaxial, soit parallèle à l'axe z (z) s'étend au travers du premier guide (1), le premier guide (1) étant monté de manière rotative autour de celui-ci et où au moins un moyen d'entraînement (6) est compris, lequel peut être accouplé au moins avec le premier guide (1), et cela pour l'entraînement en rotation du premier guide (1) autour de l'axe de rotation (z'), de telle manière que le premier guide (1) et le profil de section transversale de à barre de matière (2) peuvent être alignés entre eux pour l'insertion de la barre de matière (2), **caractérisé en ce qu'**un deuxième guide (24) est disposé de manière mobile le long de l'axe z (z) dans le dispositif de chargement de barres, et **en ce qu'**un axe de rotation (z') soit coaxial, soit parallèle à l'axe z (z) s'étend au travers du deuxième guide (24), le deuxième guide (24) étant monté de manière rotative autour de celui-ci, et **en ce que** la barre de matière (2) doit être introduite dans le deuxième guide (24) le long de l'axe z (z), et **en ce que** le premier et le deuxième guide (24) présentent des moyens de transmission réalisés de manière complémentaire entre eux, en particulier sous à forme de surface de friction et/ou de surfaces à action magnétique et/ou d'un moyen d'engagement et d'un logement, de telle manière que le premier et le deuxième guide (24) peuvent être accouplés entre eux par friction et/ou par engagement positif pour qu'en cas de rotation du premier guide (1), celui-ci entraîne le deuxième guide (24).

7. Procédé d'alignement de guides (1) au moyen d'un dispositif d'alignement de guides selon l'une des revendications 1 à 5, comprenant les étapes suivantes :
a1) entraînement par rotation des premiers guides (1) par le moyen d'entraînement (6),
b) insertion de la barre de matière (2) dans les premiers guides (1) le long de l'axe z, où, avant l'insertion de la barre de matière (2), les premiers guides (1) sont pour alignement entre eux maintenus dans une position de rotation prédéfinie par rapport au profil de section transversale de la barre de matière (2).

8. Procédé d'alignement de guides (1, 24) au moyen d'un dispositif d'alignement de guides selon la revendication 6, comprenant les étapes suivantes :
a1) entraînement par rotation du premier guide (1) par le moyen d'entraînement (6),
b) insertion de la barre de matière (2) dans le premier guide (1) le long de l'axe z.

9. Procédé selon la revendication 8, où après l'étape a1) et avant l'étape b), l'étape :
a2) d'accouplement par friction et/ou par engagement positif du premier guide (1) avec au moins un deuxième guide (24) est exécutée,
et où, lors de l'étape b) :
la barre de matière (2) est en outre insérée dans le deuxième guide (24) le long de l'axe z (z).

10. Procédé selon la revendication 8 ou 9, où avant l'insertion de la barre de matière (2), le premier et/ou le deuxième guide (24) sont pour alignement entre eux maintenus dans une position de rotation prédéfinie par rapport au profil de section transversale de la barre de matière (2).
